# EUROPÄISCHE PATENTSCHRIFT

(11) **EP 2 106 850 B1**
(45) Veröffentlichungstag und Bekanntmachung des Hinweises auf die Patenterteilung: **24.11.2010**
(21) Anmeldenummer: 08103331.8
(22) Anmeldetag: 02.04.2008
(51) Int. Cl.: B01J 19/00, B01J 19/02, B01J 19/26, B01F 5/02

(54) **Vorrichtung und Verfahren zur Durchführung chemischer und physikalischer Stoffumwandlungen**
Device and method for performing chemical and physical material conversion
Dispositif et procédé de transformations chimiques et physiques

(43) Veröffentlichungstag der Anmeldung: 07.10.2009
(73) Patentinhaber: Evonik Degussa GmbH, 45128 Essen (DE)
(72) Erfinder: Lortz, Wolfgang, 63607 Wächtersbach (DE); Filz, Karlheinz, 63674 Altenstadt (DE); Will, Werner, 63571 Gelnhausen (DE); Diener, Uwe, 63538 Großkrotzenburg (DE)

(56) Entgegenhaltungen:
- DE-A1- 10 141 054
- DE-A1- 10 360 766
- DE-C1- 10 204 470
- GB-A- 2 433 747
- US-B1- 6 173 798

## Beschreibung

Die Erfindung betrifft eine Vorrichtung und ein Verfahren zur Durchführung chemischer und physikalischer Stoffumwandlungen.

Zur Herstellung feinteiliger Dispersionen stehen Vorrichtungen, wie Kugelmühlen oder Rührwerkskugelmühlen, zur Verfügung. Nachteilig bei diesen Vorrichtungen ist der Abrieb der eingesetzten Mahlkörper, zum Beispiel aus Glas, Keramik, Metall oder Sand. Dieser Abrieb schränkt die Verwendung der damit erzeugten Dispersionen in Bereichen, die nur geringe Verunreinigungen tolerieren, wie zum Beispiel das Polieren empfindlicher Oberflächen ein.

Höhere Energieeinträge sind mit einem Planetenkneter/-mixer möglich. Die Wirksamkeit dieses Systems ist jedoch mit einer ausreichend hohen Viskosität der bearbeiteten Mischung verbunden, um die benötigten hohen Scherenergien zum Zerteilen der Teilchen einzubringen.

Mit Hochdruckhomogenisatoren, bei denen eine unter einem hohen Druck stehende Vordispersion gegen gepanzerte Wandbereiche einer Kammer trifft, können zwar sehr feinteilige Dispersionen erzeugt werden, es hat sich jedoch gezeigt, dass die Kammer einer solche Vorrichtung trotz der Panzerung einem starken Verschleiß unterliegt. Die Teilung der Vordispersion in zwei Ströme, die über eine Düse entspannt werden und exakt aufeinandertreffen, reduziert den Abrieb, löst das Problem aber nicht. Insbesondere die Zentrierung der aufeinandergerichteten Vordispersionen ist schwierig. Ein solches Verfahren ist beispielsweise in EP-A-766997 beschrieben.

In EP-B-1165224 wird ein Verfahren beschrieben, bei dem der Abrieb bei der Herstellung von Dispersionen deutlich verringert wird, wenn die unter hohem Druck stehenden geteilten Vordispersionsströme auf einen gemeinsamen Kollisionspunkt entspannt werden, der sich in einem gasgefüllten, materialfernen Mahlraum befindet. Durch diese Anordnung soll die Kavitation an Materialwänden im Gegensatz zu den oben aufgeführten Hochdruckvorrichtungen, die in einem mit Flüssigkeit gefüllten Mahlraum arbeiten, minimiert werden. Der Gasstrom übernimmt dabei auch die Aufgabe die Dispersion aus dem Mahlraum zu transportieren und die Dispersion zu kühlen. Nachteilig bei diesem Verfahren ist die Aufarbeitung der Gas-Dispersionsgemische. Um wirtschaftlich vernünftige Durchsätze zu erzielen, müssen große Mengen an Gas eingesetzt werden. Die Abtrennung dieses Gases erfordert einen erhöhten apparativen Aufwand, wie zum Beispiel entsprechend dimensionierte Entgaser. Die aufgrund des hohen Gasanteils reduzierte Wärmeleitfähigkeit erfordert, beim gegebenenfalls erforderlichen Abkühlen des Gemisches, größer dimensionierte und damit teurere Kühlvorrichtungen.

In DE-C-10204470 wird der Einsatz von Wasserdampf als Gas beschrieben. Die Kollision der zu dispergierenden Teilchen findet auch hier im materialfernen Raum statt. Durch den Einsatz von Wasserdampf können die Nachteile des Verfahrens gemäß EP-B-1165224, bei dem große Mengen an Gas aus dem Reaktionsgemisch entfernt werden müssen, vermieden werden. Dennoch erweist sich auch bei dem Verfahren DE-C-10204470, dass die Aufrechterhaltung einer Gasatmosphäre während der Dispersion wirtschaftlich nicht sinnvoll ist.

In DE-A-10360766 wird ein Verfahren beschrieben, bei dem der Mahlraum mit einer Vordispersion geflutet ist, wodurch die Aufarbeitung von Gemischen aus Gas und Dispersion vermieden werden kann.

In DE-A-10141054 wird ein Reaktor beschrieben, bei dem nach der Justierung der Fluidstrahlen zusätzlich drehbar aufliegende Hartkörper, beispielsweise Keramikkugeln, in den Strahlengang eingebracht werden. Dies führt dazu, dass die Fluidstrahlen im Falle einer Dejustierung nicht auf die Reaktorwand trifft und zu einer Zerstörung des gesamten Reaktors führt, sondern lediglich auf die austauschbaren Keramikkugeln trifft. Es hat sich jedoch gezeigt, dass die Wirkung einer solchen Vorrichtung nur kurzfristig ist, da es durch die Bewegung der drehbar aufliegenden Hartkörper ebenfalls zu Abtragungen an den Stellen des Reaktors kommt, an der die Hartkörper aufliegen und an der Wandung anliegen. In Folge führt die dadurch hervorgerufene Dejustierung der Fluidstrahlen zu weiteren Schäden am Reaktor.

All die genannten Vorrichtungen, bei denen unter Hochdruck physikalische oder chemische Stoffumwandlungen vorgenommen werden, weisen den Nachteil auf, dass es unter den extremen Bedingungen zu einem Materialabtrag kommt. Hierdurch wird zum einen das Reaktionsprodukt verunreinigt, zum anderen ist ein solcher Reaktor nicht wirtschaftlich zu betreiben.

Aufgabe der vorliegenden Erfindung war es daher, einen Reaktor bereitzustellen, mit dem unter hohem Druck physikalische oder chemische Stoffumwandlungen durchgeführt über einen langen Zeitraum durchgeführt werden können ohne dass es hierbei zu nennenswerten Materialabträgen und zu einer Dejustierung des Strahlenganges kommt.

Die Aufgabe der Erfindung wird gelöst durch einen Reaktor zur Durchführung chemischer und physikalischer Stoffumwandlungen umfassend einen von einem Reaktorgehäuse umschlossenen Reaktionsraum, wobei
- das Reaktorgehäuse wenigstens zwei seitliche Fluideingänge mit justierbar gelagerten Düsen aufweist, die einen Winkel von 20-160 Grad umfassen, und
- durch die Düsen Fluidstrahlen, die sich vorzugsweise in einer ebene befinden, geleitet werden, die in einem gemeinsamen Kollisionspunkt innerhalb des Reaktionsraumes aufeinandertreffen und
- der Reaktor einen Fluidausgang am Boden des Reaktionsraumes aufweist,
welcher dadurch gekennzeichnet ist, dass
- auf dem Boden des Reaktionsraumes eine Bodenplatte aufliegt,
   · die eine Bohrung als Fluidausgang aufweist und
   · auf der sich beweglich aufliegende Kugeln befinden, die den ursprünglichen Fluidstrahlengang der einzelnen Strahlen im dejustierten Zustand blockieren und
- sich jeweils zwischen einer beweglich aufliegenden Kugel und der Wandung des Reaktionsraumes sich eine auf dem Boden des Reaktionsraumes aufstehende Halbschale befindet und
- Bodenplatte, Halbschale und beweglich aufliegende Kugeln aus einem oder mehreren Hartstoffen bestehen.

Der erfindungsgemäße Reaktor bewirkt, dass sich die beweglich aufliegenden Kugeln nur in Kontakt mit der aus einem Hartstoff bestehenden Bodenplatte und Halbschale befinden. Dabei kann die auf dem Boden des Reaktionsraum aufliegende Bodenplatte und die Halbschalen austauschbar gestaltet sein, so dass nach sehr langen Reaktionszeiten ein einfacher Austausch möglich ist.

Die Erfindung ermöglicht es, dass das eigentliche Reaktorgehäuse aus einem üblicherweise verwendeten Material, beispielsweise Edelstahl, bestehen kann, während nur Bodenplatte, Halbschale und beweglich aufliegende Kugeln aus einem oder mehreren Hartstoffen bestehen.

Unter einem Hartstoff gemäß der Erfindung ist ein Stoff zu verstehen, dessen Mohs-Härte wenigstens 7,5, bevorzugt wenigstens 8 beträgt. Geeignet sind insbesondere gehärtete Metalle, Metallcarbide, Metallnitride, Metallboride, Borcarbid und Zircondioxid, Korund und Saphir.

In einer bevorzugten Ausführungsform bestehen die auf dem Reaktorboden aufliegende Bodenplatte und die Halbschalen aus gekennzeichnet, dass es sich bei dem Hartstoff um Wolframcarbidpartikel in einer Nickel- oder Kobaltmatrix handelt. Diese Material zeichnen sich auch dadurch aus, dass sie durch Erosionsverfahren, wie Draht- und Senkerosion, relativ einfach zu bearbeiten sind. Aufgrund der hohen chemischen Beständigkeit sind Wolframcarbidpartikel in einer Nickelmatrix besonders bevorzugt.

Die beweglich aufliegenden Kugeln bestehen bevorzugt aus Korund, Saphir, Rubin oder Metallnitriden als Hartstoff. Besonders bevorzugt kann Siliciumnitrid sein.

In einer besonderen Ausführungsform des erfindungsgemäßen Reaktors befindet sich auf den auf der Bodenplatte beweglich aufliegenden Kugeln eine weitere Kugel oder ein Zylinder. Die Kugel oder der Zylinder sind so dimensioniert, dass sie mit den auf der Bodenplatte aufliegenden beweglichen Kugeln jeweils einen Kontaktpunkt aufweisen. Kugel und Zylinder stabilisieren die Lage der auf der Bodenplatte aufliegenden, beweglichen Kugeln. Eine weitere Stabilisierung kann durch eine Federbelastung der aufliegenden Kugel erreicht werden.

In einer besonderen Ausführungsform kann der Zylinder mit einer Bohrung von Stirnfläche zu Stirnfläche versehen sein, so dass durch diese Bohrung ein weiteres Fluid oder Gas direkt auf den Kollisionspunkt gerichtet werden kann und dadurch zusätzlich physikalische oder chemische Stoffumwandlungen erzielt werden können.

Die Kugeln bestehen vorteilhafterweise ebenfalls aus einem Hartstoff.

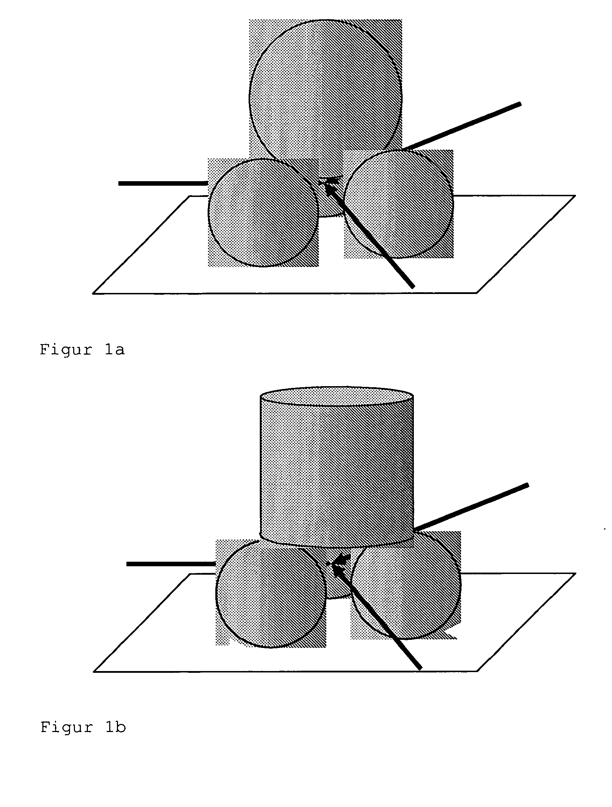

Figur 1a zeigt die Ausführungsform am Beispiel dreier auf der Bodenplatte beweglich aufliegenden Kugeln und einer zusätzlichen aufsitzenden Kugel. Die Pfeile stellen die Fluidstrahlen dar, die sich auf einem gemeinsamen Kollisionspunkt treffen. Figur 1b zeigt einen aufsitzenden Zylinder.

Der Zylinder weist zusätzlich den Vorteil auf, dass die Justierung der Fluidstrahlen einfacher ist, als im Falle der Kugel. Weiterhin kann der Zylinder eine zusätzliche Bohrung aufweisen, über die ein weiterer Stoff in den Reaktionsraum eingebracht werden kann.

Die Anzahl der Bodenplatte aufliegenden beweglichen Kugeln beträgt mindestens drei, entsprechend drei Fluidstrahlen, die auf einem gemeinsamen Punkt kollidieren. Es können jedoch beispielsweise 4, 5 oder 6 Kugeln auf der Bodenplatte aufliegen, entsprechend, 4, 5 oder 6 Fluidstrahlen.

Die Bodenplatte selbst kann schalenartige Vertiefungen aufweisen in denen die beweglich aufliegenden Kugeln aufliegen. Auch hierdurch kann eine Stabilisierung der Lage der Kugeln bewirkt werden. Die schalenartige Vertiefung ist vorteilhafterweise so dimensioniert, dass die Kugel zu ca. 2,5 % - 25 % des Radius der Kugel in die Vertiefung eintaucht.

Ein weiterer Gegenstand der Erfindung ist ein Verfahren zur Durchführung chemischer und physikalischer Stoffumwandlungen bei dem man ein fluides Medium unter einen Druck von 50 bis 4000 bar setzt und über die Fluideingänge des erfindungsgemäßen Reaktors über Düsen auf einen gemeinsamen Kollisionspunkt hin entspannt und über eine Öffnung in der Bodenplatte und dem Reaktorboden aus dem Reaktor leitet.

Unter chemischen und physikalischen Stoffumwandlungen sind beispielsweise Homogenisierung, Emulgierung, Teilchenzerkleinerung, Disaggregation und Deagglomeration zu verstehen.

Das erfindungsgemäße Verfahren eignet sich besonders zur Herstellung von Dispersionen.

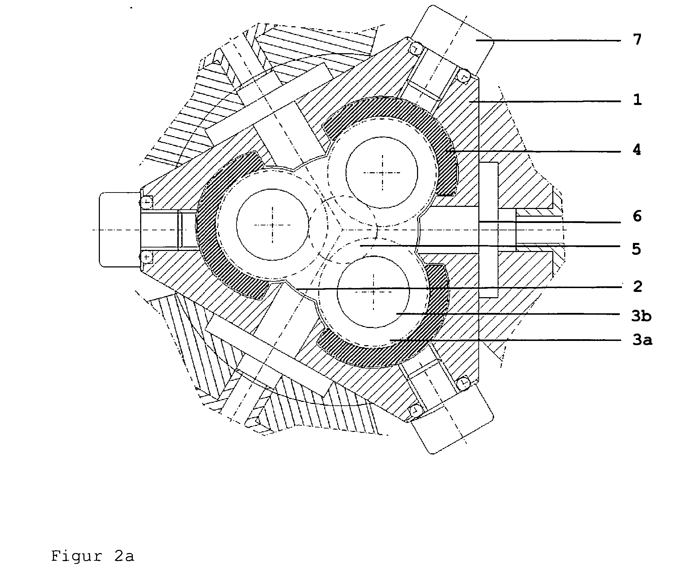

Figur 2a zeigt einen Querschnitt durch einen erfindungsgemäßen Reaktor mit:
- 1 =: Reaktorgehäuse
- 2 =: Bodenplatte
- 3a =: auf Bodenplatte aufliegende, bewegliche Kugel (gestrichelte Linie),
- 3b =: Rand der Vertiefung in der die bewegliche Kugel auf der Bodenplatte aufliegt (durchgezogener Kreis)
- 4 =: Halbschale
- 5 =: Fluidausgang
- 6 =: Fluideingang
- 7 =: verschlossene Fluidausgänge

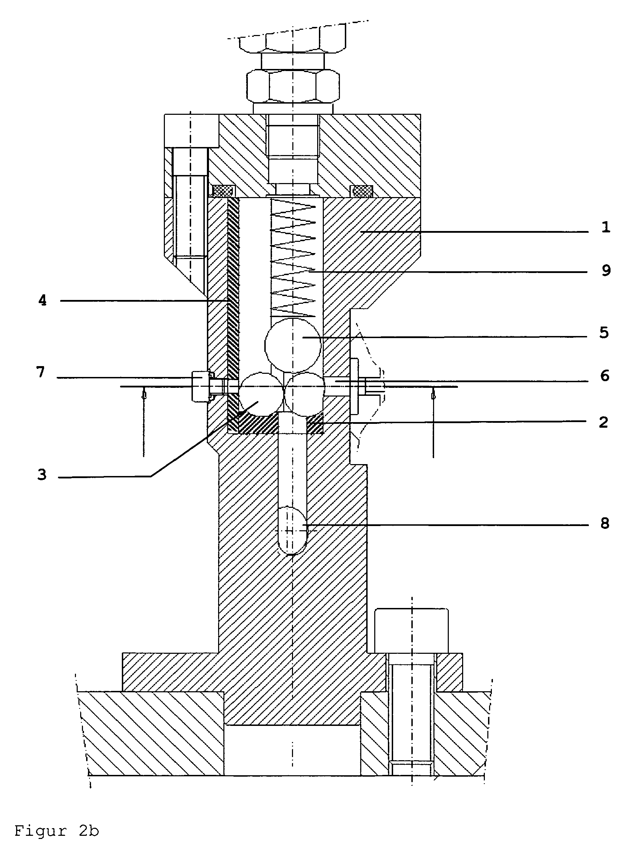

Figur 2b zeigt einen Längsschnitt durch einen erfindungsgemäßen Reaktor mit
- 1 =: Reaktorgehäuse
- 2 =: Bodenplatte
- 3 =: auf Bodenplatte aufliegende, bewegliche Kugel
- 4 =: Halbschale
- 5 =: aufliegende Kugel
- 6 =: Fluideingang
- 7 =: verschlossene Fluidausgänge,
- 8 =: Fluidausgang,
- 9 =: Feder.

## Patentansprüche

1. Reaktor zur Durchführung chemischer und physikalischer Stoffumwandlungen umfassend einen von einem Reaktorgehäuse umschlossenen Reaktionsraum, wobei das Reaktorgehäuse wenigstens zwei seitliche Fluideingänge mit justierbar gelagerten Düsen aufweist, die einen Winkel von 20-160 Grad umfassen, und durch die Fluidstrahlen geleitet werden, die in einem gemeinsamen Kollisionspunkt innerhalb des Reaktionsraumes aufeinandertreffen und einen Fluidausgang am Boden des Reaktionsraumes aufweist,
wobei
- auf dem Boden des Reaktionsraumes eine austauschbare Bodenplatte aufliegt,
· die eine Bohrung als Fluidausgang aufweist und
· auf der sich beweglich aufliegende Kugeln befinden, die den ursprünglichen Fluidstrahlengang der einzelnen Strahlen im dejustierten Zustand blockieren und
- sich jeweils zwischen einer beweglich aufliegenden Kugel und der Wandung des Reaktionsraumes sich eine auf dem Boden des Reaktionsraumes aufstehende Halbschale befindet und
- Bodenplatte, Halbschale und beweglich aufliegende Kugeln aus einem oder mehreren Hartstoffen bestehen.

2. Reaktor nach Anspruch 1, **dadurch gekennzeichnet, dass** es sich bei dem Hartstoff der Bodenplatte und der Halbschale um Wolframcarbidpartikel in einer Nickelmatrix oder Kobaltmatrix handelt.

3. Reaktor nach den Ansprüchen 1 oder 2, **dadurch gekennzeichnet, dass** auf den auf der Bodenplatte beweglich aufliegenden Kugeln eine weitere Kugel oder ein Zylinder aufliegt.

4. Reaktor nach den Ansprüchen 1 bis 3, **dadurch gekennzeichnet, dass** die Bodenplatte schalenartige Vertiefungen aufweist in denen die beweglich aufliegenden Kugeln aufliegen.

5. Reaktor nach den Ansprüchen 1 bis 4, **dadurch gekennzeichnet, dass** die sich die in der Reaktorwandung befindlichen Fluideingänge in einer Ebene befinden.

6. Verfahren zur Durchführung chemischer und physikalischer Stoffumwandlungen bei dem man ein fluides Medium unter einen Druck von 50 bis 4000 bar setzt und über die Fluideingänge des Reaktors gemäß der Ansprüche 1 bis 5 über Düsen auf einen gemeinsamen Kollisionspunkt hin entspannt und über eine Öffnung in der Bodenplatte und dem Reaktorboden aus dem Reaktor leitet.

## Claims

1. Reactor for carrying out chemical and physical materials transformations, which comprises a reaction space enclosed by a reactor housing, where the reactor housing has at least two lateral fluid inlets having adjustably mounted nozzles which include an angle of 20-160 degrees and through which fluid jets which impinge on one another at a common collision point within the reaction space are passed and the reactor has a fluid outlet at the bottom of the reaction space, wherein
- an exchangeable bottom plate
• which has a hole as fluid outlet and
• on which moveably supported spheres are located so as to block the original path of the individual fluid jets in the unaligned state rests on the bottom of the reaction space and
- a half shell standing upright on the bottom of the reaction space is located between each moveably supported sphere and the wall of the reactor space and
- bottom plate, half shell and moveably supported spheres comprise one or more hard materials.

2. Reactor according to Claim 1, **characterized in that** the hard material of the bottom plate and of the half shell is composed of tungsten carbide particles in a nickel matrix or cobalt matrix.

3. Reactor according to Claim 1 or 2, **characterized in that** the spheres supported moveably on the bottom plate are superposed by a further sphere or a cylinder.

4. Reactor according to any of Claims 1 to 3, **characterized in that** the bottom plate has dish-like depressions in which the moveably supported spheres rest.

5. Reactor according to any of Claims 1 to 4, **characterized in that** the fluid inlets located in the reactor wall are located in a plane.

6. Method of carrying out chemical and physical materials transformations, in which a liquid medium is placed under a pressure of from 50 to 4000 bar and depressurized via the fluid inlets of the reactor according to any of Claims 1 to 5 via nozzles to a common collision point and is discharged from the reactor through an opening in the bottom plate and the bottom of the reactor.

## Revendications

1. Réacteur pour effectuer des transformations physiques et chimiques, comprenant une chambre de réaction enveloppée par un logement de réacteur, dans lequel le logement de réacteur présente au moins deux entrées de fluide latérales avec des buses positionnées de manière ajustable, qui définissent un angle de 20 à 160 degrés, et à travers lesquelles des jets de fluide sont guidés, qui se rejoignent dans un point de collision commun à l'intérieur de la chambre de réaction et présente une sortie de fluide sur le fond de la chambre de réaction,
dans lequel
- sur le fond de la chambre de réaction repose une plaque de fond remplaçable,
• qui présente un alésage comme sortie de fluide et
• sur laquelle se trouvent des billes reposant de manière mobile, qui bloquent le trajet original des jets de fluide des jets individuels en l'état non ajusté et
- entre une bille reposant de manière mobile et la paroi de la chambre de réaction se trouve respectivement une demie-coque se dressant sur le fond de la chambre de réaction et
- la plaque de fond, la demie-coque et les billes reposant de manière mobile sont constituées d'un ou plusieurs matériaux durs.

2. Réacteur selon la revendication 1, **caractérisé en ce que** le matériau dur de la plaque de fond et de la demie-coque consiste en des particules de carbure de wolfram dans une matrice de nickel ou une matrice de cobalt.

3. Réacteur selon la revendication 1 ou 2, **caractérisé en ce qu'**une bille supplémentaire ou un cylindre repose sur les billes reposant de manière mobile sur la plaque de fond.

4. Réacteur selon les revendications 1 à 3, **caractérisé en ce que** la plaque de fond présente des cavités en forme de coque dans lesquelles les billes reposant de manière mobile viennent reposer.

5. Réacteur selon les revendications 1 à 4, **caractérisé en ce que** les entrées de fluide se trouvant dans la paroi de réacteur se trouvent dans un plan.

6. Procédé pour effectuer des transformations physiques et chimiques, dans lequel on expose un milieu fluide à une pression de 50 à 4000 bar et on le détend par l'intermédiaire des entrées de fluide du réacteur selon les revendications 1 à 5 par l'intermédiaire de buses en le dirigeant vers un point de collision commun et on le guide à l'extérieur du réacteur en passant par une ouverture dans la plaque de fond et dans le fond du réacteur.
